# EUROPEAN PATENT APPLICATION

(11) **EP 2 104 208 A2**
(43) Date of publication of application: **23.09.2009**
(21) Application number: 09154914.7
(22) Date of filing: 11.03.2009
(51) Int. Cl.: H02K 29/03

(54) **Systems and methods involving optimized motors**

(30) Priority: 18.03.2008 US 50751
(71) Applicant: Delphi Technologies, Inc., Troy, Michigan 48007 (US)
(72) Inventor: Islam, Mohammed R., Saginaw, MI 48603 (US); Islam, Mohammad S., Saginaw, MI 48603 (US); Sebastian, Tomy, Saginaw, MI 48603 (US); Chandy, Ashok, Fenton, MI 48430 (US)
(74) Representative: Denton, Michael John

(57) **Abstract**

A motor comprising, a rotor having a shaped pole operative to minimize cogging torque and electro motive Force (EMF) harmonics, a stator having teeth members, the teeth members including, end portions, wherein the end portions partially define slot openings having a first dimension, and a notch opening defined by the end portions having a second dimension.

## Description

### BACKGROUND OF THE INVENTION

Brushless motors often fail to rotate smoothly. Motor structures and phase commutations result in periodic disturbances in a motor, also called torque ripples. The torque ripples may degrade the performance of the motor because of vibrations and noise. Torque ripples also affect a speed of the motor.

Torque ripples may be caused, in part, by cogging torque. Cogging torque is a result of the interaction between slots in a stator and permanent magnets on a rotor.

An interaction between the motor current and the back-EMF of the motor current can also cause a torque ripple. Torque ripples may be measured as a harmonic resonance of varying orders. A motor system that minimizes torque ripples is desired.

### SUMMARY OF THE INVENTION

The above described and other features are exemplified by the following Figures and Description which includes an exemplary embodiment of a motor comprising, a rotor having a shaped pole operative to minimize cogging torque and electro motive Force (EMF) harmonics, a stator having teeth members, the teeth members including, end portions, wherein the end portions partially define slot openings having a first dimension, and a notch opening defined by the end portions having a second dimension.

An alternate exemplary embodiment including a motor comprising, a rotor having a shaped pole partially defined by a middle portion dimension and an end portion dimension, a stator having teeth members, the teeth members including, end portions, wherein the end portions partially define slot openings having a first dimension, and a notch opening defined by the end portions having a second dimension.

Another alternate exemplary embodiment including a motor comprising, a rotor having a shaped pole partially defined by a middle portion dimension and an end portion dimension, and a stator having teeth members, the teeth members including end portions, wherein the end portions partially define slot openings having a first dimension, wherein the end portion dimension is 0.3-0.9 times the middle portion dimension, a normalized slot depth dimension is 0.01-0.06 from a end surface of the teeth members to a beveled portion of the teeth members, and a slot angle is 30 to 50 degrees defined by the beveled portion and a slot surface of the teeth members.

### BRIEF DESCRIPTION OF THE DRAWINGS

Referring now to the Figures wherein like elements are numbered alike:

FIG. 1 illustrates a side partially cut-away view of an exemplary embodiment of a motor.

FIG. 2 illustrates a side view of a shaped pole of an exemplary embodiment of the motor of FIG. 1.

FIG. 3 further illustrates a side view of a shaped pole of an exemplary embodiment of the motor of FIG. 1.

FIG. 4 illustrates graphs representing cogging torque and cogging harmonics for a motor having shaped poles and a motor having unshaped poles.

FIG. 5 illustrates a side view of a portion of an exemplary embodiment of a stator of the motor of FIG. 1.

FIG. 6 illustrates graphs representing cogging torque and cogging harmonics for a motor having unshaped poles and a stator with one notch.

FIG. 7 illustrates a side view of a portion of an alternate exemplary embodiment of a stator of the motor of FIG. 1.

FIG. 8 illustrates graphs representing cogging torque and cogging harmonics for a motor having unshaped poles and a stator with two notches.

FIG. 9 illustrates a graph comparing the cogging torque for an exemplary motor having a combination shaped poles and a stator with one notch and two notches.

FIG. 10 illustrates a graph comparing the cogging harmonics for an exemplary motor having shaped poles and a stator with one notch having a variety of dimensions in millimeters.

FIG. 11 illustrates a graph comparing the cogging harmonics for an exemplary motor having shaped poles and a stator with two notches having a variety of dimensions.

### DESCRIPTION OF THE PREFERRED EMBODIMENTS

Torque ripple in brushless motors may be caused in part, by cogging torque and back-electromotive Force (EMF) harmonics. Shaping the magnetic poles of a rotor to optimize the amount of cogging torque and back-EMF harmonics reduces torque ripple. Stators also include teeth that are separated with slots. The teeth may include notches in end portions of the teeth. Incorporating notches having widths different than widths of the slots and optimizing the design to reduce cogging torque and back-EMF harmonics may reduce the torque ripple in a motor. By combining shaped poles and notches having widths different than widths of the slots the overall torque ripple in a motor is reduced.

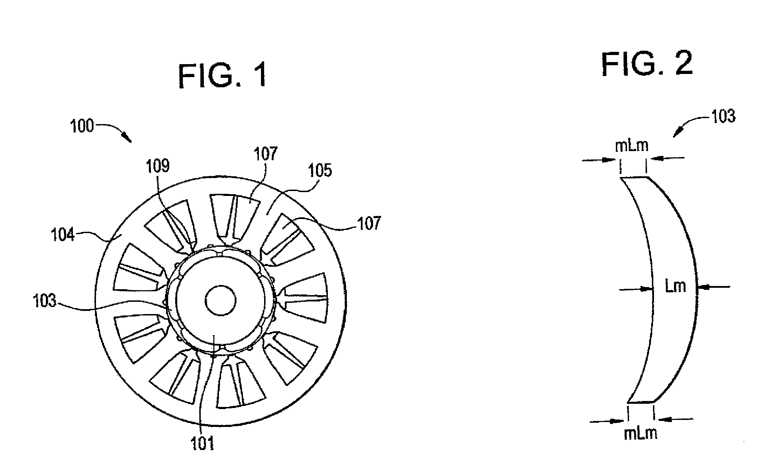

FIG. 1 illustrates a side partially cut-away view of an exemplary embodiment of a motor 100 having a rotor 101 with shaped poles 104. The motor 100 also includes a stator 104 having teeth members 105 and stator windings 107. The spaces between the teeth members are slots 109.

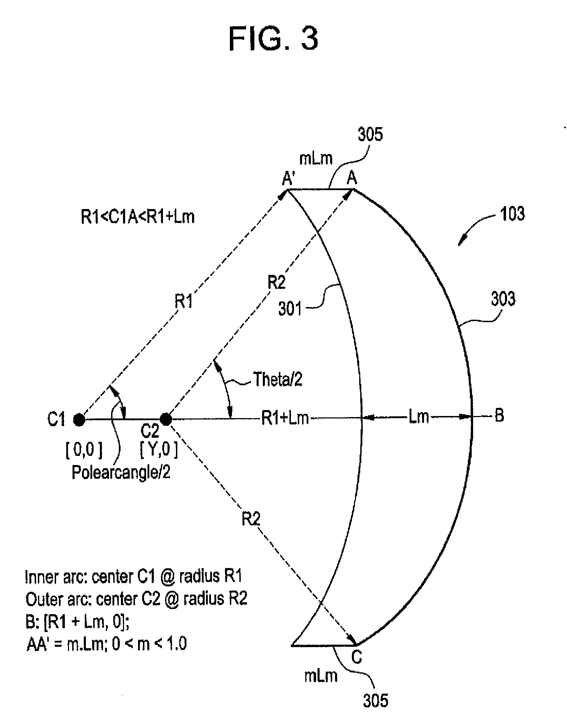

The motor 100 has six poles 103 and nine slots 109. The poles 103 have been optimized using a Finite Element (FE) Analysis software to reduce the cogging torque and back-EMF harmonics in the motor. FIGs. 2 and 3 further illustrate the shape of the poles 103.

FIG. 2 illustrates a side view of an exemplary embodiment of the pole 103. The pole 103 has a thickness (Lm) at a middle portion of the pole 103, and a thickness (mLm) at end portions of the pole 103. FIG. 3 further illustrates the dimensions of the pole 103.

Referring to FIG. 3, the pole 103 has an inner arc 301, an outer arc 303, and end portions 305. The inner arc 301 has a center point C1 at [0,0] and a radius (R1). The outer arc 303 has a center point C2 (Y,0) and a radius (R2). The end portions 305 are defined by points A' and A. A radius C1A' = R1,, The distance AA'=mLm where (m) is the ratio of the magnet thickness at the two ends of the magnet to the thickness at the center of the magnet (Lm) in Fig. 3. An angle C1A',C1B = Polearcangle/2 and an angle C1A, C1B = theta/2 and is less than or equal to Polarcangle/2. The points are defined as follows:
A: [(R1) cos(polearcangle/2)+m*Lm, ((R1) sin(Polearcangle/2)]; 0 < m < 1.0
B: [R1+Lm, 0]
C: mirror image of A
A': [(R1) cos(polarcangle/2), ((R1) sin(polarcangle/2)]
C1: [0, 0]
C2: [Y, 0];
where Y is distance C1C2.

FIGs. 2 and 3 illustrate one exemplary embodiment of a pole 103 optimized to reduce torque ripples. Other motor configurations having different numbers of poles and gaps may use different shaped poles to reduce torque ripples. The shapes for optimized poles in other motor configurations may be found by experimentation and simulations.

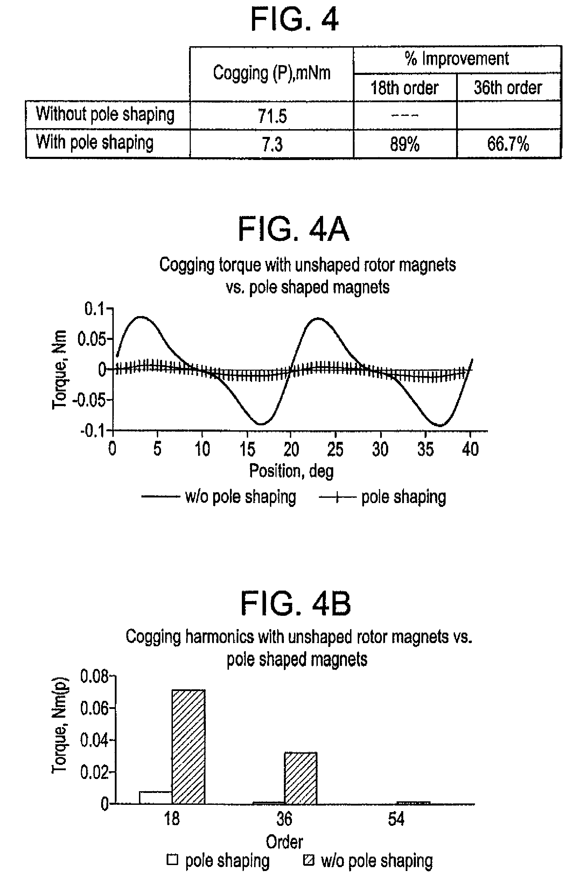

FIG. 4 includes graphs comparing the cogging torque and cogging harmonics for an exemplary motor having unshaped rotor magnets and shaped poles. The graph 4a shows the improved cogging torque of a rotor having pole shaped magnets verses a rotor having unshaped magnets. Graph 4b illustrates the improved 18th, 36th, and 54th order harmonics of the rotor having pole shaped magnets. The improvement in 18th order harmonics is 89%, and the improvement in 36th order harmonics is 66.7%.

Though pole shaping may reduce torque ripples, the use of notches in stator teeth further reduces the effects of cogging torque and back-EMF harmonics.

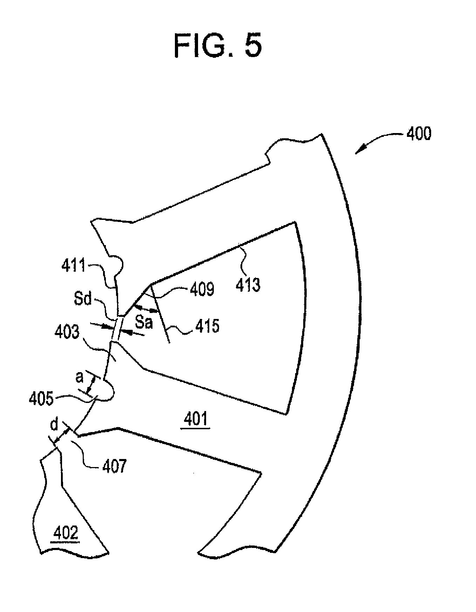

FIG. 5 illustrates a side view of a portion of a stator 400. The stator 400 includes a first stator tooth 401 having an end portion 403. A second stator tooth 402 is adjacent to the first stator tooth 401. The closest distance between the stator teeth 401 and 402 is a gap 407. The gap 407 allows stator windings (not shown) to be wound around the stator teeth 401 and 402. The gap has a dimension "d" defined by the stator teeth as shown. The end portion 403 of the stator tooth 402 defines a notch 405. The notch 405 is circular shaped and has a dimension "a" as shown. A slot depth (Sd) dimension is also shown. The Sd dimension is defined by a distance from an end surface 411 of the end portion 403 to a beveled portion 409 of the end portion 403. A slot angle (Sa) is defined by the angle between the beveled portion 409 of the end portion 403 to a line 415 that is perpendicular to a slot surface 413 of the stator teeth.

The stator 400 includes a number of other stator teeth similar to the stator teeth 401 and 402. Each of the stator teeth in the stator 400 has a notch 405 and a gap 407. The dimension "d" may be increased or decreased, though it has a minimum dimension that is limited by the size of the stator windings. The dimension "a" of the notch may also be increased or decreased. The dimensions "a" and "d" may be optimized through experimentation and simulation to determine dimensions that reduce the cogging torque and the back-EMF harmonics of the motor.

The following table describes exemplary embodiments of motors having improved cogging harmonics. The table below includes three types of motors, similar to the motor illustrated in FIG. 1 having a stator similar to FIG. 4, and a pole similar to the pole 103 of FIGs. 2 and 3. The motors include a 27 slot/6 pole motor, a 12 slot/10 pole motor, and a 9 slot/6 pole motor.

| Motor Type | 27 slot/6 pole | 12 slot/10 pole | 9 slot/6 pole | 9 slot/6 pole |
|---|---|---|---|---|
| Number of Notches | 0 | 1 | 1 | 2 |
| m | 0.3-0.9 | 0.5-0.9 | 0.4-0.6 | 0.4-0.6 |
| a to b ratio | | 0.9-1.1 | 0.3-1.7 | 0.3-1.7 |
| Normalized Slot Depth (Sd/(R1+Lm) | .01-.06 | | | |
| Slot Angle (Sa) | 30-50 deg. | | | |

The number of notches indicates the number of notches in each type of motor similar to the notches 405 of FIG. 4. The m values represent a range of m values for the pole (as shown in FIG. 2). The a to b ratios represent a range of ratios for the a dimension to the b dimension (shown in FIG. 4). The slot depth (Sd) (shown in FIG. 4) represents a range of dimensions of the slot depth as a ratio of the (R1+Lm) dimension. The slot angle (Sa) represents a range of angles for the Sa angle (shown in FIG. 4). For example, the 12 slot/10 pole motor has improved cogging harmonics with: one notch in the stator teeth of the motor stator; the ratio of the notch opening 405 to the slot opening 407 dimensions-the a to b ratio, is between 0.9 and 1.1; and the m value (0.5-0.9) multiplied by the Lm dimension results in the mLm dimension of the end portions 305 of the pole 103. For all motors included are a range of Slot depth (Sd) dimensions and (Sa) dimensions (shown in FIG. 5).

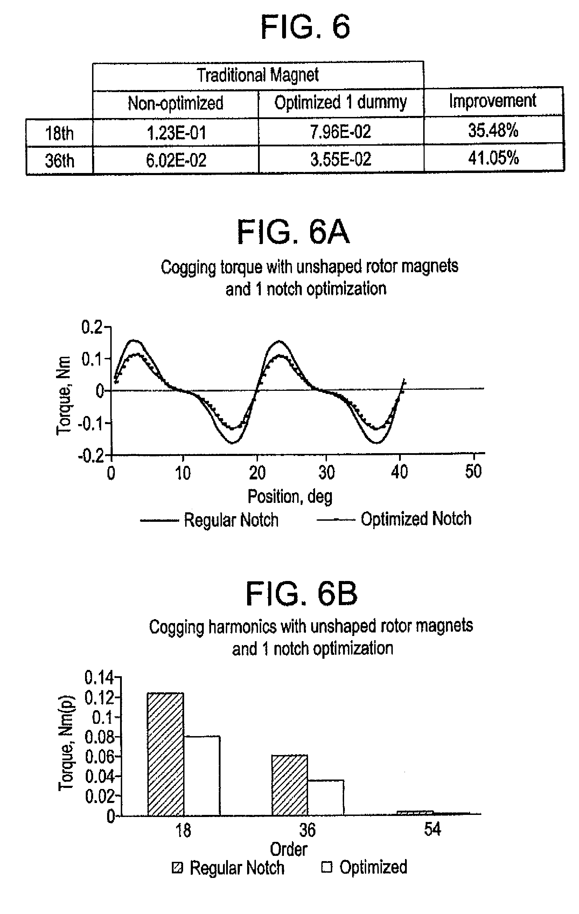

FIG. 6 includes graphs comparing the cogging torque and cogging harmonics for an exemplary motor having unshaped poles and a stator with one notch. Graph 6a illustrates the improved cogging torque of a stator with one optimized notch versus a stator having one regular notch. Graph 6b illustrates the improved cogging harmonics resultant from the optimized notch. The 18^{th} order harmonics are improved 35.48% while the 36^{th} order harmonics are improved 41.05%.

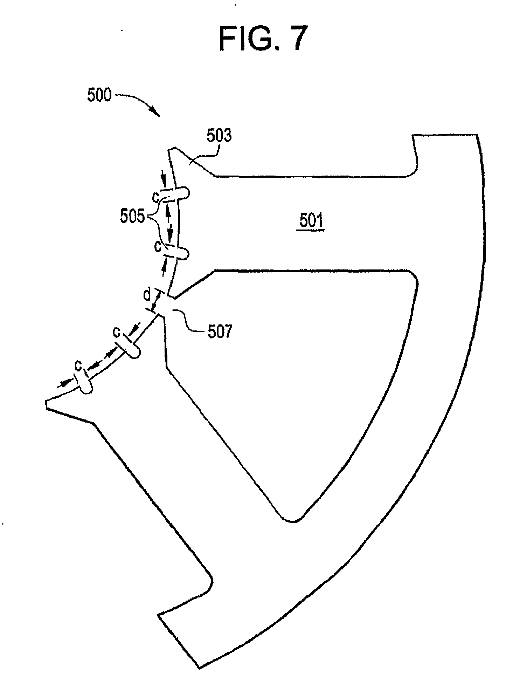

FIG. 7 illustrates an alternate embodiment of a stator. Stator 500 includes a stator tooth 501 having an end portion 503. The end portion 503 is similar to the end portion 405 (of FIG. 5) and includes two notches 505 each having a dimension "c". The notches 505 in the illustrated embodiment are U-shaped. A gap 507 having a dimension "d" is similar to the gap 407 of FIG. 5. The dimension "c" may be increased or decreased and optimized with the dimension "d" of the gap 507 to reduce the cogging torque and the back EMF-harmonics of the motor.

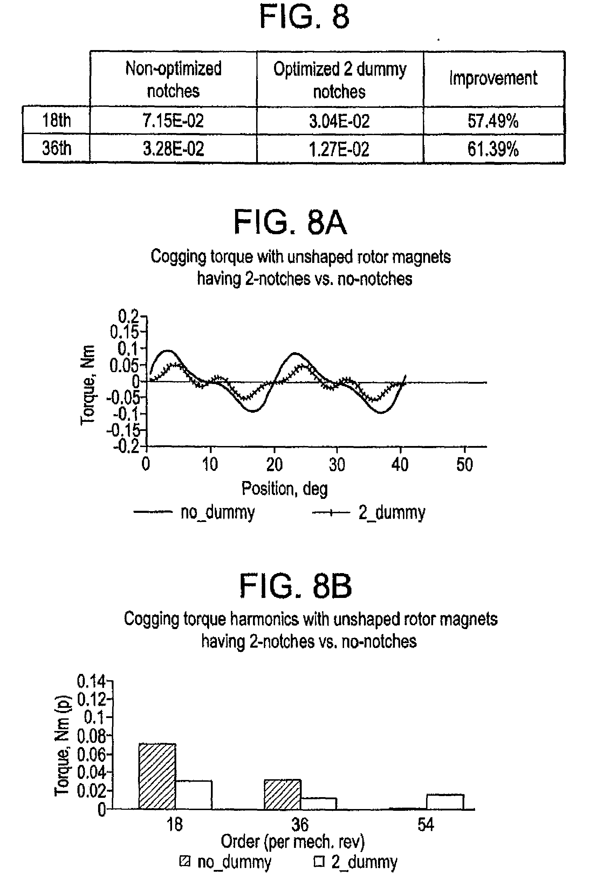

FIG. 8 includes graphs comparing the cogging torque and cogging harmonics for an exemplary motor having unshaped poles and a stator with two notches. Graph 8a shows improved cogging torque of a stator having two notches versus a stator having no notches. Graph 6b illustrates the improved cogging harmonics of the motor having the optimized two notches. The 18^{th} order harmonics are improved 57.49% and the 36^{th} order harmonics are improved 61.39%.

Simulations have shown that embodiments optimized with stator teeth having one notch generally reduce torque ripples, back-EMF harmonics, and cogging torque when the notch dimension "a" is greater than the slot dimension "b," while embodiments with stator teeth having two notches are optimized when the notch dimension "c" is less than the slot dimension "d." However, some motors having different numbers of poles and slots may not have the same properties resulting in different relationships between the notch dimensions and slot dimensions for optimization.

The benefits of shaped poles and notches having different dimensions than slot dimensions are enhanced when combined in a motor using both shaped poles and optimized dimensions of the slots and notches. Simulated results of a motor having 9 slots and six poles show a further reduction in cogging torque and back-EMF harmonics when the two optimized configurations are combined.

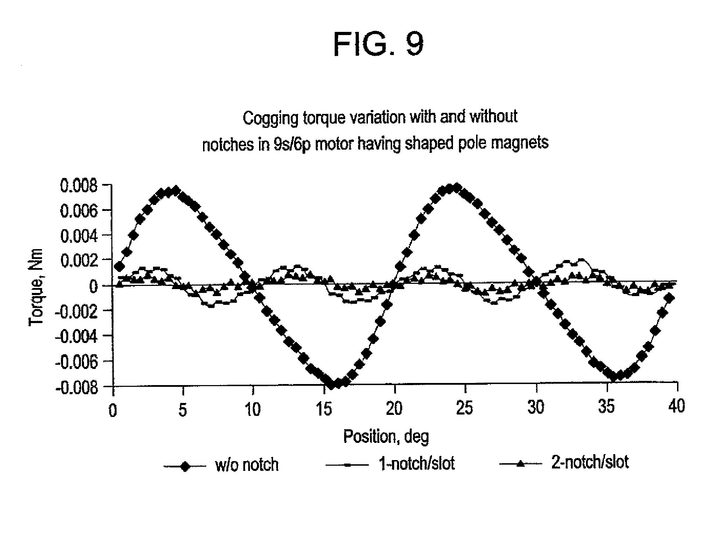

FIG. 9 includes a graph comparing the cogging torque for an exemplary motor having a combination shaped poles and a stator with one notch and two notches. In the illustrated graph, the cogging torque is considerably less with the combination of shaped poles and notches than a motor having unshaped poles and no notches.

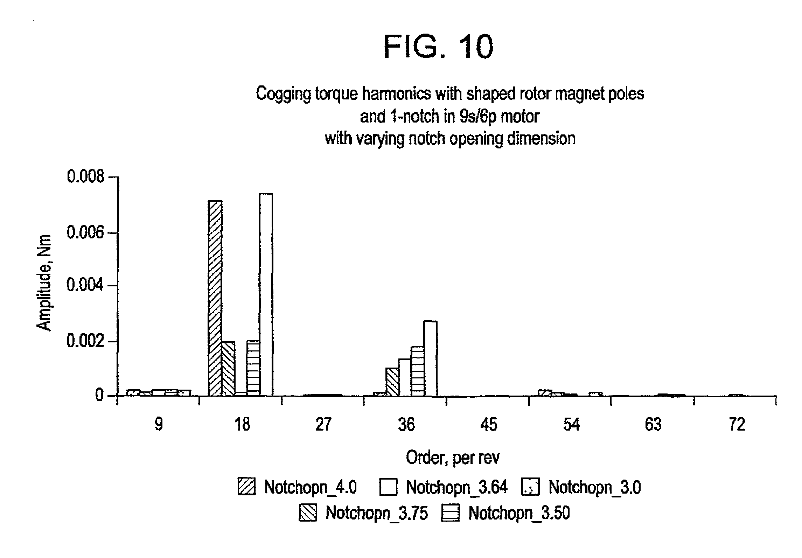

FIG. 10 includes a graph comparing the cogging harmonics for an exemplary motor having shaped poles and a stator with one notch having a variety of dimensions in millimeters. The harmonics of the motors having shaped poles and a stator with one notch where the notch is between 4.0 mm and 3.0 mm are particularly improved.

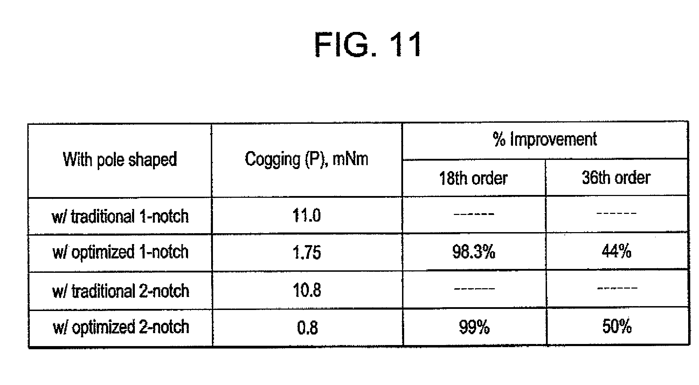

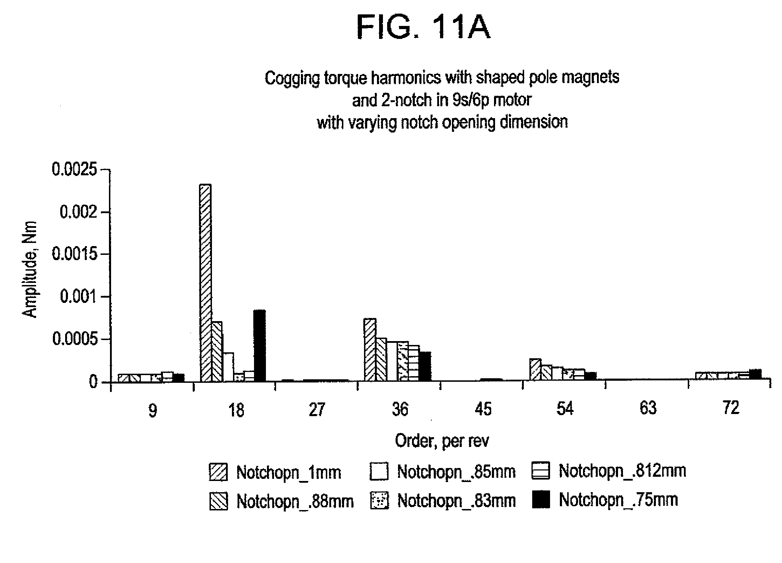

FIG. 11 includes a graph comparing the cogging harmonics for an exemplary motor having shaped poles and a stator with two notches having a variety of dimensions. The harmonics and cogging torques of the motors having shaped poles and a stator with two notches where the notches are optimized are improved.

While the invention has been described with reference to exemplary embodiments, it will be understood by those of ordinary skill in the pertinent art that various changes may be made and equivalents may be substituted for the elements thereof without departing from the scope of the present disclosure. In addition, numerous modifications may be made to adapt the teachings of the disclosure to a particular object or situation without departing from the essential scope thereof. Therefore, it is intended that the Claims not be limited to the particular embodiments disclosed as the currently preferred best modes contemplated for carrying out the teachings herein, but that the Claims shall cover all embodiments falling within the true scope and spirit of the disclosure.

## Claims

1. A motor comprising:
a rotor having a shaped pole operative to minimize cogging torque and electromotive Force (EMF) harmonics;
a stator having teeth members, the teeth members including:
end portions, wherein the end portions partially define slot openings having a first dimension; and
a notch opening defined by the end portions having a second dimension.

2. The motor of claim 1, wherein the second dimension is greater than the first dimension.

3. The motor of claim 1, wherein the end portions further include a second notch opening having the second dimension.

4. The motor of claim 3, wherein the second dimension is smaller than the first dimension.

5. The motor of claim 1, wherein the notch opening is circular shaped.

6. The motor of claim 1, wherein the notch opening is U-shaped.

7. The motor of claim 3, wherein the second notch opening is circular shaped.

8. The motor of claim 3, wherein the second notch opening is U-shaped.

9. A motor comprising:
a rotor having a shaped pole partially defined by a middle portion dimension and an end portion dimension;
a stator having teeth members, the teeth members including:
end portions, wherein the end portions partially define slot openings having a first dimension; and
a notch opening defined by the end portions having a second dimension.

10. The motor of claim 9, wherein the end portion dimension is 0.5-0.9 times the middle portion dimension, and the second dimension is 0.9 to 1.1 times the first dimension.

11. The motor of claim 9, wherein the end portion dimension is 0.4-0.6 times the middle portion dimension, and the second dimension is 0.3 to 1.7 times the first dimension.

12. The motor of claim 9, wherein the end portions further include a second notch opening having the second dimension, the end portion dimension is 0.4-0.6 times the middle portion dimension, and the second dimension is 0.3 to 1.7 times the first dimension.

13. The motor of claim 9, wherein the notch opening is U-shaped.

14. The motor of claim 12, wherein the second notch opening is circular shaped.

15. The motor of claim 12, wherein the second notch opening is U-shaped.
